# EUROPÄISCHE PATENTSCHRIFT

(11) **EP 2 557 657 B1**
(45) Veröffentlichungstag und Bekanntmachung des Hinweises auf die Patenterteilung: **24.06.2020**
(21) Anmeldenummer: 12005509.0
(22) Anmeldetag: 27.07.2012
(51) Int. Cl.: H02J 9/00, H05B 47/105, H05B 47/18, H05B 45/00

(54) **Notbeleuchtungssystem und Verfahren für dessen Versorgung**
Emergency lighting system and method for supplying it with power
Système d'éclairage d'urgence et procédé pour son alimentation

(30) Priorität: 01.08.2011 DE 102011109090
(43) Veröffentlichungstag der Anmeldung: 13.02.2013
(73) Patentinhaber: Eaton Intelligent Power Limited, Dublin 4 (IE)
(72) Erfinder: Prasuhn, Jürgen, 59494 Soest (DE)
(74) Vertreter: Grünecker Patent- und Rechtsanwälte PartG mbB

(56) Entgegenhaltungen:
- EP-A1- 2 194 762
- WO-A1-2008/134433
- DE-A1-102009 001 177

## Beschreibung

Die Erfindung betrifft ein Notbeleuchtungssystem und ein Verfahren zu dessen Versorgung. Ein Notbeleuchtungssystem des Anmelders ist beispielsweise unter dem Namen GuideLed CGLine aus der Praxis bekannt. Dieses Notbeleuchtungssystem weist eine Vielzahl von Einzelbatterieleuchten in Form von Sicherheits- oder Rettungszeichenleuchten auf, welche jeweils eine eigene Batterie als Ersatzstromquelle besitzen.

Ferner ist als Notbeleuchtungssystem das Zentralbatteriesystem ZB-S bekannt, welches ebenso eine Vielzahl von Sicherheits- und Rettungszeichenleuchten aufweist, die aber bei einem Ausfall der Netzspannung oder einer anderen, im Normalbetrieb zur Versorgung genutzten Spannung aus einer zentralen Batterie als Ersatzstromquelle versorgt werden.

Eine entsprechende Rettungszeichenleuchte weist zum Beispiel ein Piktogramm zur Fluchtweganzeige, ein entsprechendes Leuchtmittel sowie weitere elektrische und elektronische Einrichtungen zum Betrieb und zur Versorgung des Leuchtmittels auf. Als Einzelbatterieleuchte umfasst diese außerdem eine wiederaufladbare Batterie.

Eine weitere Einrichtung des Notbeleuchtungssystems ist eine Sicherheitsleuchte zur Not- und Fluchtwegausleuchtung. Diese ist für einen Deckeneinbau oder einen Deckenaufbau ausgebildet.

Weitere Bestandteile eines solchen Notbeleuchtungssystems sind beispielsweise eine Lichtschalterabfrageeinrichtung, die zum gemeinsamen Schalten von Sicherheitsleuchten mit der Allgemeinbeleuchtung oder - in Sonderfällen - zum Schalten der Sicherheitsleuchten während eines Batteriebetriebs verwendet wird.

Eine Netzspannungsüberwachungseinrichtung als weiteres Teil des Notbeleuchtungssystems dient zur Überwachung einer der in Regel drei Phasen einer Netzspannungsversorgung hinsichtlich Phasenparameter, wie Phasenfolge, Phasenausfall, Ober- oder Unterspannung und Asymmetrie. Bei entsprechender Fehlermeldung durch diese Überwachungseinrichtung kann eine Umschaltung auf eine andere sichere Ersatzstromversorgung erfolgen.

Weiterhin weist ein Notbeleuchtungssystem eine Netzspannung und eine Ersatzstromversorgung auf, die je nach Konzept zentral oder dezentral angeordnet ist. Die Netzstromversorgung erfolgt in der Regel mit Netzspannung von 230 VAC, die über entsprechende Versorgungsleitungen an die verschiedenen Komponenten das Notbeleuchtungssystem übertragen wird. Entsprechende Wandier können je nach Erfordernis zur Spannungswandlung vorgesehen sein. Die Ersatzstromversorgung ist bei Einzelbatterieleuchten mit in die Leuchten integrierten Batterien und bei Zentralbatteriesystemen mit einer zentral angeordneten Batterie ausgebildet, wobei die Batterien bei Ausfall der Netzspannung die Notbeleuchtung aufrechterhalten und bei vorhandener Netzspannung die Batterien wieder aufladen.

Aus der EP1066690 ist bekannt, bei einem solchen Notlichtsystem die verschiedenen Komponenten über elektrische Versorgungsleitungen von einer Steuerungseinrichtung her nicht nur mit Energie zu versorgen, sondern gleichzeitig über diese Versorgungsleitungen auch ein Steuersignal zu übertragen. Dazu wird die übertragene Versorgungsspannung in bestimmter Weise zur Kodierung des Steuersignals modifiziert.

Für das vorangehend beschriebene Notbeleuchtungssystem sind separate Installationen in einem Gebäude notwendig, um die verschiedenen Komponenten mit einander und mit den entsprechenden Stromversorgungen zu verbinden.

Aus c't extra Netzwerke 01/2001, Seite 22 ff. ist weiterhin bekannt, dass eine Stromversorgung über LAN erfolgen kann, was auch "Power over Ethernet", POE, genannt wird. Eine bestehende Netzwerkverkabelung zur Kommunikation zwischen den verschiedenen Netzwerkkomponenten wird ebenfalls zur Stromversorgung von einer zentralen unterbrechungsfreien Stromversorgung her verwendet. Das heißt, es wird eine bestehende Netzwerkverkabelung beziehungsweise das entsprechende Ethernet-Kabel verwendet, um ebenfalls die Energieversorgung zu realisieren.

Gemäß der geltenden Standards für PoE erfolgt die Energieversorgung bei einer Spannung von bis zu 48 Volt und bei relativ niedrigem Strom, wie beispielsweise maximal 350 Milliampere.

Eine entsprechende Netzwerkinfrastruktur für PoE ist in vielen Gebäuden bereits als Standardinstallation vorgesehen und dient beispielsweise zur Verbindung und Versorgung von IP-Telefonen, Web-Kameras, Modems, Routern oder dergleichen.

Eine analoge Netzwerkinfrastruktur wird beispielsweise auch in dem electronic Journal 01/201 auf Seiten 37 ff. beschrieben. Aufgrund der beschränkt einsetzbaren Netzwerkkomponenten bei PoE wegen der niedrigen maximalen Leistung werden allerdings keine weiteren Anwendungen beschrieben.

WO 2008/134433 A1 beschreibt ein System zur Beleuchtung eines Gebäudes. Das System verwendet insbesondere eine PoE-Versorgung und das System kann eine Vielzahl unterschiedlicher Komponenten für die Notbeleuchtung, Sicherheitsbeleuchtung und dergleichen, umfassen. Solche Komponenten können beispielsweise LEDs, Leuchtstofflampen, Vorschaltgeräte, Fluchtweganzeigen oder dergleichen sein. In dem System werden unterschiedliche Spannungsversorgungen eingesetzt, wie beispielsweise eine Wechselspannungsquelle sowie ggf. auch Batterien. Die entsprechende PoE-Technologie wird sowohl zur Übermittlung von Leistung als auch von Daten eingesetzt.

Der Erfindung liegt die Aufgabe zugrunde, ein entsprechendes Notbeleuchtungssystem der eingangs genannten Art dahingehend zu verbessern, dass dieses mit einem geringen Installationsaufwand und kostengünstig auch in schwer zugänglichen Bereichen in eine Netzwerkstruktur mit PoE integriert werden kann.

Diese Aufgabe wird durch die Merkmale des Anspruchs 1 gelöst.

Vorrichtungsmäßig sind die entsprechenden Netzwerkkomponenten untereinander über Ethernet-Kabel verbunden, wobei diese auch bei den entsprechenden Netzwerkkomponenten des Notbeleuchtungssystems zusätzlich zur Datenübertragung zur Stromversorgung eingesetzt sind. Die entsprechenden Netzwerkkomponenten einer solchen Netzwerkstruktur mit PoE sind die oben genannten Sicherheitsleuchten, Rettungszeichenleuchten, Lichtschalterabfrageeinrichtungen, Netzspannungsüberwachungseinrichtungen, Netzstromversorgung und zumindest eine Ersatzstromversorgung.

Das heißt, bei dem Notbeleuchtungssystem werden alle Netzwerkkomponenten über eine entsprechende Netzwerkinfrastruktur und insbesondere die Ethernet-Kabel verbunden und versorgt.

Dazu werden die verschiedenen Netzwerkkomponenten über Ethernet-Kabel miteinander verbunden und über diese erfolgt eine Übertragung von Energie und Daten.

Dabei ist zu beachten, dass auch die für das Notbeleuchtungssystem vorgesehenen Stromversorgungen mit in der Netzwerkstruktur integriert sind, siehe Netzstromversorgung und Ersatzstromversorgung.

Bei einem Notbeleuchtungssystem sind in der Regel eine Reihe von Strängen mit entsprechenden Leuchten und weiteren Einrichtungen vorhanden, die separat zu überwachen und zu steuern sind. Dies erfolgt erfindungsgemäß in einfacher Weise dadurch, dass die entsprechende Netzwerkstruktur segmentiert wird und beispielsweise entsprechende Netzwerksegmente insbesondere in Abhängigkeit vom Leistungsbedarf der zugehörigen Netzwerkkomponenten mit Energie versorgt werden. Dies kann insbesondere dadurch erreicht werden, das jeweils einem Netzwerksegment der Netzwerkstruktur eine Ersatzstromversorgung zugeordnet ist. Entsprechend kann auch die Netzversorgungsspannung mittels des entsprechenden PSE auf die verschiedenen Netzwerksegmente je nach Leistungsbedarf verteilt werden.

Bestimmte Netzwerkkomponenten, wie Sicherheitsleuchten, Rettungszeichenleuchten, Lichtschalterabfrageeinrichtungen, Netzspannungsüberwachungseinrichtungen und beispielsweise Ersatzstromversorgung sind Energieverbraucher, PD oder energieverbrauchende Netzwerkkomponenten und andere Netzwerkkomponenten, wie Netzstromversorgung, Ersatzstromversorgung und dergleichen sind Energieversorger, PSE beziehungsweise energieversorgende Netzwerkkomponenten. Die Ersatzstromversorgung ist je nach Einsatz ein PD oder ein PSE, abhängig davon, ob sie in einem Stromversorgungsmodus oder einem Lademodus ist.

Die entsprechende Netzstromversorgung ist in einem PSE integriert, wobei dieser PSE einen entsprechenden Spannungsumsetzer aufweisen kann, um beispielsweise eine 220 VAC als Netzspannung in beispielsweise 48 VDC für PoE umzusetzen.

In analoger Weise ist ebenfalls die Ersatzstromversorgung in Form eines PSE oder auch PD in der Netzwerkstruktur integriert.

Der PSE zur Energieversorgung mittels Netzstromversorgung kann entsprechend ein sogenannter Endspan-Versorger sein, der außer zur Einspeisung von Leistung auch zur Einspeisung der entsprechenden Daten in die Netzwerkstruktur dient. Weitere Stromversorgungen können als sogenannte Midspan-Versorger in der Netzwerkstruktur integriert sein, wobei ein solcher Midspan-Versorger in der Regel zwischen einem Endspan-Versorger und zugehörigen PDs angeordnet ist.

Um eine entsprechende zentrale Überwachungseinheit des Notbeleuchtungssystems in der Netzwerkstruktur zu integrieren, kann diese analog über ein Ethernet-Kabel mit entsprechenden Netzwerkkomponenten verbunden sein. Die zentrale Überwachungseinheit dient zur Überwachung und Steuerung zumindest einer Anzahl von entsprechenden Netzwerkkomponenten.

Bei PoE und zum Anschluss der entsprechenden Ethernet-Kabel wird ein bestimmter Steckverbinder gemäß geltender Norm verwendet, der in analoger Weise auch für die Netzwerkkomponenten des Notbeleuchtungssystems einsetzbar ist. Ein solcher Steckverbinder ist der RJ-45 Steckverbinder. Die Netzwerkkomponenten des Notbeleuchtungssystems weisen eine entsprechende Anschlusstechnik sowohl zum Abgriff der Stromversorgung als auch der Daten hinsichtlich dieses Steckverbinders auf.

Erfindungsgemäß kann das entsprechende Ethernet-Kabel, das bei dem gegenwärtigen Standard achtadrig ausgebildet ist, zwei Adernpaare zur Datenübertragung verwenden. Das heißt, es gibt im Wesentlichen eine Hin- und eine Rückleitung zur Übertragung von Daten. Dadurch sind die Datenübertragungsrichtungen voneinander entkoppelt und störungsfrei.

Zur entsprechenden Stromversorgung kann zumindest ein freies Adernpaar oder können auch die Adernpaare zur Datenübertragung eingesetzt werden. Dies wird beispielsweise Spare-pair-Speisung bei Stromversorgung über ungenutzte Adernpaare genannt, während es bei Nutzung der zur Datenübertragung verwendeten Adernpaare auch zur Stromübertragung als Phantomspeisung bezeichnet wird.

Durch PoE sind für die verschiedenen Netzwerkkomponenten des Notbeleuchtungssystems keine weiteren Netzgeräte oder dergleichen notwendig, wodurch ebenfalls Kosten reduziert und die Installation vereinfacht wird.

Durch entsprechende Anordnung von Ersatzstromversorgungen können die oben beschriebenen Einzelbatterieleuchten durch zentral von der entsprechenden PSE beziehungsweise Ersatzstromquelle versorgte Leuchten ersetzt werden.

Durch die Zuordnung entsprechender Ersatzstromversorgungen zu Netzwerksegmenten ergibt sich in der Regel eine größere Servicefreundlichkeit im Vergleich zu Einzelbatterieleuchten, wobei auch die Anzahl entsprechender Ladeeinrichtungen verringert werden kann. Im Hinblick auf die Ersatzstromversorgungen ist es in der Regel ausreichend, wenn eine Ladeeinrichtung jeweils einer Ersatzstromversorgung zugeordnet ist.

In diesem Zusammenhang kann es weiterhin als vorteilhaft betrachtet werden, wenn ein Überwachen des Status von Ladeeinrichtung und/oder Ersatzstromversorgung und/oder weiterer Netzwerkkomponenten durchführbar und über die Netzwerkstruktur abrufbar ist.

Dies kann beispielsweise mittels der zentralen Überwachungseinheit oder auch von einer PSE her erfolgen. Durch die entsprechend Netzwerkstruktur ist allerdings der Status auch von jeder anderen Netzwerkkomponente her abrufbar.

Dabei kann analog auch der Status der Netzspannung mittels Netzspannungsüberwachungseinrichtung überwacht werden und insbesondere dieser Status an eine Leuchte als Netzwerkkomponente und/oder an die zentrale Überwachungseinheit gemeldet werden. Dies gilt analog auch für andere Netzwerkkomponenten, die einen entsprechenden Status einer anderen Netzwerkkomponente abrufen oder zumindest empfangen können.

In diesem Zusammenhang ist es weiterhin von Vorteil, wenn der Status an der entsprechenden Netzwerkkomponente darstellbar ist. Dazu kann die Netzwerkkomponente, wie beispielsweise eine Leuchte, eine Anzeigeeinrichtung aufweisen. Wird beispielsweise durch die Netzspannungsüberwachungseinrichtung ein Netzausfall insbesondere im Hinblick auf die Allgemeinbeleuchtung detektiert, führt dies in der Netzwerkstruktur zu einem Aktivieren beispielsweise der Sicherheitsleuchten. Die entsprechende Stromversorgung erfolgt weiterhin über PoE. Die Stromversorgung beziehungsweise Stromeinspeisung erfolgt weiterhin über ein PSE oder auch durch eine entsprechende Ersatzstromversorgung. Diese ist einem entsprechenden PSE zugeordnet. Dabei ist es ebenfalls möglich, dass die Netzspannungsversorgung von einem PSE von einem anderen Netzwerksegment her erfolgt, wobei auch hier die entsprechenden Netzspannungen auf im Moment 48 VDC heruntergesetzt wird.

Weiterhin vorteilhaft gemäß vorliegender Erfindung ist, dass insbesondere bei vorhandener Netzspannungsversorgung der entsprechende PSE neben der PoE-Versorgung auch ein Laden und Überwachen der Ersatzstromversorgung übernehmen kann. Es besteht ebenfalls die Möglichkeit, dass einer solchen Ersatzstromversorgung eine Ladeeinrichtung zugeordnet ist, die in diesem Fall von der entsprechenden PSE überwacht und gesteuert wird.

Wie bereits ausgeführt, kann auch der Status der Ladeeinrichtung beziehungsweise der Ersatzstromversorgung über die Netzwerkstruktur abrufbar und an einer Netzwerkkomponente darstellbar sein.

Bei den Leuchten ist weiterhin zu beachten, dass eine entsprechende leuchteneigene Anzeigeeinrichtungen auch Betriebs- und/oder Fehlerzustände der Leuchte anzeigen kann.

Bei Notbeleuchtungssystemen ist vorgeschrieben, dass diese in bestimmten Abständen Tests durchführen, was erfindungsgemäß ebenfalls über die Netzwerkstruktur mit den entsprechenden Netzwerkkomponenten durchgeführt werden kann. In der Regel weist die Leuchte eine entsprechende Testauslöseeinrichtung auf. Eine solche Testauslöseeinrichtung ist beispielsweise ein Testtaster. Ein solcher Test kann darin bestehen, dass der PSE veranlasst wird, für eine bestimmte Zeit auf die Ersatzstromversorgung umzuschalten, um Sicherheitsfunktionen des Notbeleuchtungssystems zu überprüfen. Weiterhin kann zur Feststellung der Verfügbarkeit der Ersatzstromversorgung über eine bestimmte Betriebszeit auch ein Betriebsdauertest ausgelöste werden, bei dem alle zu versorgenden Netzwerkkomponenten zugeschaltet beziehungsweise aktiviert werden. Dies gilt analog auch für einen Sicherheitstest oder weitere Tests einer jeden Netzwerkkomponente oder auch von Gruppen von Netzwerkkomponenten.

Um quasi einen externen Zugriff beziehungsweise einen Fernzugriff auf das Notbeleuchtungssystem zu ermöglichen, kann beispielsweise einer Gruppe von Netzwerkkomponenten des Notbeleuchtungssystems ein Web-Interface zugeordnet sein. Auf diese Weise kann über ein tragbares und nicht mit der Netzwerkstruktur direkt verbundenes Gerät lokal aber auch entfernt beispielsweise von einem anderem Gebäudeteil, ein Zugriff auf die Netzwerkstruktur erfolgen. Ein Beispiel für ein solches tragbares Gerät ist ein Tablett-PC, wobei allerdings als Gerät auch ein PC mit eigener Netzversorgung verwendet werden kann. Bei den bisherigen Komponenten des Notbeleuchtungssystems war bereits eine Adressierung möglich. Diese konnte über Dipschalter an der entsprechenden Komponente oder auch über Zuweisung einer Adresse von der zentralen Überwachungseinheit erfolgen. Auch bei dem erfindungsgemäßen Notbeleuchtungssystem ist eine Adressierung möglich, wobei in diesem Zusammenhang jeder Netzwerkkomponente eine MAC (Media-access-controll)- Adresse zugeordnet ist. In der Regel ist eine solche MAC-Adresse einer Sicherungsschicht des OSI-Modells zugeordnet. Um die Sicherungsschicht mit der entsprechenden Vermittlungsschicht zu verbinden, wird zum Beispiel bei Ethernet ein Adressresolutions-Protokoll im Rahmen von IPv4 oder IPv6 verwendet.

Bei PoE ist weiterhin zu beachten, dass in der Regel vom PSE her eine Klassifizierung beziehungsweise Erkennung der PoE-Fähigkeit eines PD erfolgt. Dazu wird ein spezieller Innenwiderstand des PD erfasst, der gegenwärtig einen Wert zwischen 19 und 26,5 kOhm aufweist. Liegt ein solcher Innenwiderstand vor, erfolgt zuerst die Feststellung der PoE-Fähigkeit und anschließend eine entsprechende Klassifizierung zur Festlegung einer Leistungsklasse der Netzwerkkomponente. Solche Klassifizierungen beziehungsweise Feststellung der PoE-Fähigkeit erfolgen beispielsweise bei Anschluss einer neuen Netzwerckomponente oder bei Initialisierung der Netzwerkstruktur. Dies kann analog auch für das Notbeleuchtungssystem gelten. Gleichzeitig kann in diesem Zusammenhang auch die Adresse, das heißt die MAC-Adresse, der entsprechenden Netzwerkkomponente durch den PSE festgestellt werden.

Wie bereits weiter oben ausgeführt, besteht auch bei PoE die Möglichkeit, dass die entsprechende Netzwerkkomponente, insbesondere Leuchte, für einen Batteriebetrieb mit eigener Batterie ausgelegt ist.

Diese Batterie ist wiederaufladbar und kann zur Wiederaufladung durch den zugeordneten PSE aufgeladen und überwacht werden.

Erfindungsgemäß besteht ebenfalls die Möglichkeit, dass die Netzwerkstruktur außer Komponenten mit PoE-Fähigkeit zusätzliche Komponenten des Notbeleuchtungssystem aufweist, die beispielsweise mittels sogenannter Energieleistungskommunikation mit der zentralen Überwachungseinheit verbunden sind. Diese Energieleistungskommunikation entspricht der eingangs beschriebenen Versorgung und Kommunikation gemäß EP1066690. Dadurch ergibt sich ein Notbeleuchtungssystem mit Mischbetrieb.

Es wurde bereits vorangehend auf die Feststellung der PoE-Fähigkeit hingewiesen. Dazu können die entsprechenden Netzwerkkomponenten des erfindungsgemäßen Notbeleuchtungssystems mit einem vorbestimmten Abschlusswiderstand versehen sein, der von dem PSE her festgestellt wird.

Weiterhin kann die Netzwerkstruktur eine Zugangskontroll- und Authentifizierungseinrichtung aufweisen. Diese kann beispielsweise in der zentralen Überwachungseinheit oder auch in entsprechenden Access Points, wie WLAN und/oder Bluetooth Access Points integriert sein. Es besteht ebenfalls die Möglichkeit, dass diese Einrichtung zentral ange-ordnet ist und bei Zugriff auf die Netzwerkstruktur oder eine Netzwerkkomponente die entsprechende Zugangskontrolle beziehungsweise Authentifizierung durchführt.

Erfindungsgemäß besteht weiterhin die Möglichkeit, dass die Netzwerkstruktur mit PoE-Fähigkeit mit anderen Netzwerken oder Verbindungsleitungen verbunden ist, wobei zur entsprechenden Umsetzung insbesondere von Signalen eine Umsetzeinrichtung zwischen Netzwerkstruktur und den anderen Netzwerken beziehungsweise den anderen Verbindungen vorhanden ist. Diese Umsetzeinrichtung ist Teil der Netzwerkstruktur. Eine Umsetzeinrichtung dient beispielsweise zur Umsetzung von einer Glasfaserverbindung auf Ethernet-Kabel. Dadurch ist es nicht notwendig, dass alle Netzwerkkomponenten eine entsprechende Umsetzeinrichtung zum Anschluss an eine Glasfaserverbindung aufweisen. Stattdessen reicht für die entsprechende Netzwerkstruktur mit allen Netzwerkkomponenten eine Umsetzeinrichtung.

Gemäß Erfindung sind verschiedene Netzwerkkomponenten im Einsatz, die verschiedene Funktionen durchführen. Um gegebenenfalls solche Gruppen analoger Netzwerkkomponenten in bestimmter Weise als Funktionseinheiten zusammenfassen zu können, kann ein virtuelles Netz, VLAN, auf der Basis der Netzwerkstruktur eingerichtet werden.

Erfindungsgemäß wird somit ein Notbeleuchtungssystem bereitgestellt, das aufgrund einer eigenen Netzwerkstruktur mit entsprechenden Netzwerkkomponenten und PoE-Fähigkeit in entsprechenden Gebäuden oder dergleichen installiert wird, wobei allerdings ebenfalls eine Integration in bereits vorhandene Installationen von entsprechenden Netzwerkstrukturen möglich ist.

Dabei erfolgt insbesondere auch die Stromversorgung über das Datenkabel beziehungsweise Ethernet-Kabel. Pro Übertragungsrichtung entsprechender Daten wird in der Regel ein Adernpaar des Ethernet-Kabels verwendet. Die Einspeisung der elektrischen Leistung kann zentral, siehe PSE, oder dezentral an verschiedenen Stellen der Netzwerkstruktur erfolgen. Insbesondere die Ersatzstromversorgung oder -versorgungen sind dezentral zur Versorgung einzelner Netzwerksegmente angeordnet. Von entsprechenden Netzwerckomponenten her kann jederzeit eine entsprechende Überwachung des Status anderer Netzwerkkomponenten durchgeführt werden. Neue Netzwerkkomponenten sind in einfacher Weise hinzufügbar und vom PSE oder auch von anderen Netzwerkkomponenten her überprüfbar und identifizierbar. Die entsprechenden Netzwerkkomponenten sind IPbasierende Netzwerkkomponenten mit MAC-Adresse. Über die Netzwerkstruktur erfolgt die Stromversorgung und die Datenkommunikation. Zusätzlich kann eine Kommunikation mittels beispielsweise entsprechender Access Points für WLAN, Bluetooth oder dergleichen erfolgen. Ebenso ist in einfacher Weise eine Zugangskontrolle und Authentifizierung in der Netzwerkstruktur des Notbeleuchtungssystems integrierbar.

Die Netzinfrastruktur ist stark vereinheitlicht, da beispielsweise die gleichen Steckverbinder nach entsprechendem Standard verwendbar sind, siehe RJ-45 Steckverbinder. Dies gilt ebenso für das Ethernet-Kabel und dessen Verdrahtung. Zur Verminderung des Leistungsverbrauchs in der Netzwerkstruktur sind die entsprechenden Leuchtmittel der verschiedenen Leuchten insbesondere LED, OLED oder andere effiziente Lichquellen..

In der Regel wird bei dem erfindungsgemäßen Notbeleuchtungssystem eine zentrale Netzstromversorgung verwendet mit entsprechendem PSE. Dieser PSE ist als Switch oder Router ausgebildet und dient nicht nur zur Übermittlung der Daten, sondern auch zur Einspeisung entsprechenden elektrischen Leistung. Zusätzliche Midspan-PSE sind einsetzbar, um beispielsweise eine separate Stromversorgung zwischen Endspan-PSE und zugeordneten Netzwerkkomponenten bereitzustellen. Ein solcher Midspan-PSE dient in der Regel nur zur Einspeisung elektrischer Leistung, wobei die Daten durchgeschleift werden.

Die entsprechenden Router oder Switches als PSE können weitere Funktionalitäten aufweisen. Beispielsweise kann eine Umsetzeinrichtungen integriert sein, um beispielsweise eine Glasfaserverbindung mit dem Ethernet-Kabel zu verbinden. Jeder PSE kann eine Anzahl von Ports oder Anschlüssen aufweisen, die jeweils mit einem Ethernet-Kabel über RJ-45-Steckverbinder verbindbar sind. Weiterhin ist eine Trennung verschiedener Netzwerkkomponenten möglich, um beispielsweise verschiedene Stränge der Allgemeinbeleuchtung oder Notbeleuchtung mit entsprechender Anzahl von Leuchten als Funktionseinheiten zusammenzufassen oder beispielsweise auch bestimmte Stockwerke eines Gebäudes zusammenzufassen, was durch ein entsprechendes virtuelles Netz beziehungsweise VLAN-Funktionalität möglich ist.

Mittels der PSE ist ebenfalls eine Priorisierung einzelner Ports oder Anschlüsse möglich, wobei eine solche Priorisierung auch hinsichtlich der verschiedenen Netzwerkkomponenten erfolgen kann.

Im Folgenden werden vorteilhafte Ausführungsbeispiele der Erfindung anhand der in der Zeichnung beigefügten Figuren näher erläutert.

Es zeigen:
- Figur 1: eine Prinzipdarstellung eines erfindungsgemäßen Notbeleuchtungssystem mit zugehöriger Netzwerkstrukturen und einer Anzahl von Netzwerkkomponenten;
- Figur 2: eine Prinzipskizze einer ersten Möglichkeit, Daten und Energie über ein Ethernet-Kabel zu übertragen, und
- Figur 3: eine zweite Möglichkeit, Daten und Energie über ein Ethernet-Kabel zu übertragen.

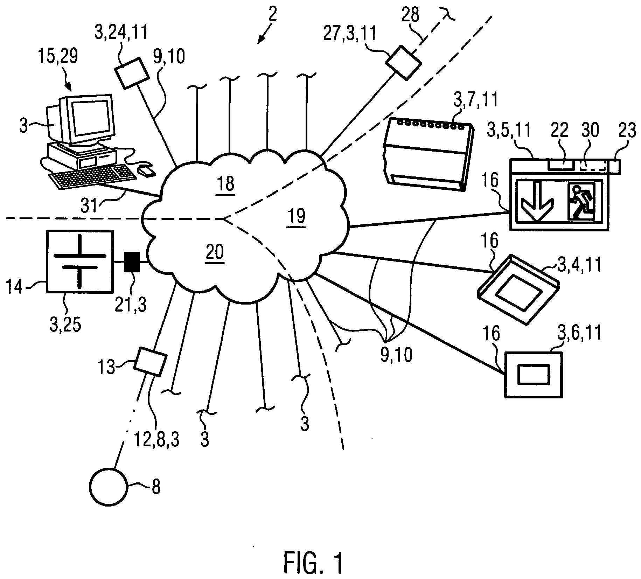

Figur 1 zeigt eine Prinzipdarstellung eines Notbeleuchtungssystem 1 mit Netzwerkstruktur 2. Von der Netzwerkstruktur 2 sind eine Reihe von Netzwerkkomponenten 3 und entsprechende Kabelverbindungen 9 in Form von Ethernetkabeln 10 dargestellt. Die Netzwerkstruktur 2 kann eine bereits beispielsweise in einem Gebäude vorhandene Netzwerkstruktur sein, in der das Notbeleuchtungssystem mit entsprechenden Netzwerkkomponenten integrierbar ist. Netzwerkkomponenten 3 sind eine Vielzahl von Sicherheitsleuchten 4, eine Vielzahl von Rettungszeichenleuchten 5, Lichtschaltern zugeordnete Lichtschalterabfrageeinrichtungen 6, Netzspannungsüberwachungseinrichtungen 7 und zumindest Netzstromversorgung 8 und eine Ersatzstromversorgung 25.

In Figur 1 sind nur eine Auswahl von Netzwerkkomponenten 3 dargestellt. Die entsprechende Netzwerkstruktur umfasst insbesondere energieverbrauchende Netzwerkkomponenten 3, 11 und energieversorgende Netzwerkkomponenten 3, 12. Entsprechende energieverbrauchende Netzwerkkomponenten werden abgekürzt als PD und entsprechende energieversorgende Netzkomponenten abgekürzt als PSE bezeichnet. Eine dieser entsprechenden Energieversorgungsnetzwerkkomponenten kann eine sogenannte Endspan-Versorgungseinrichtung 13 sein. Diese ist beispielsweise mit einer Netzstromversorgung 8 verbunden und setzt deren Spannung in eine für die Netzwerkstruktur passende Spannung von beispielsweise 48 VDC oder auch in einen anderen Spannungswert je nach entsprechender Norm für die Netzwerkstruktur um. Zur weiteren Energieversorgung der Netzwerkstruktur können sogenannte Midspan-Versorgungseinrichtungen vorgesehen sein, die ebenfalls energieversorgende Netzwerkkomponenten 3, 12 sind. Eine solche Midspan-Versorgungseinrichtung 14 kann beispielsweise die Ersatzstromversorgung 25 aufweisen oder zumindest mit dieser verbunden sein.

Es besteht ebenfalls die Möglichkeit, dass mehrere Endspan- und Midspan-Versorgungseinrichtungen 13, 14 mit entsprechender Netzstromversorgung 8 bzw. Ersatzsatzstromversorgung 20 in der Netzwerkstruktur 2 des Notbeleuchtungssystems 1 vorgesehen sind.

Das Notbeleuchtungssystem 1 weist weiterhin zumindest eine zentrale Überwachungseinheit 15 auf, die ebenfalls Teil der Netzwerkstruktur 2 ist und über ein Ethernetkabel 10 ausgeschlossen. Allerdings sind in diesem Zusammenhang auch andere Netzwerkkabel 31 möglich, um die zentrale Überwachungseinheit 15 mit der Netzwerkstruktur 2 zu verbinden.

Weiterhin besteht in diesem Zusammenhang die Möglichkeit, dass keine direkte Kabelverbindung zwischen zentraler Überwachungseinheit 15 und der Netzwerkstruktur 2 vorliegt, sondern eine drahtlose Verbindung über beispielsweise einen Access-Point 24 als Netzwerkkomponente 3. Ein solcher Access-Point 24 kann ein WLAN, Bluetooth oder anderer Access-Point sein. Dieser ist über ein entsprechendes Ethernetkabel 10 mit anderen Netzwerkkomponenten 3 verbunden.

Über den Access-Point 24 kann auch eine Fernabfrage von Parametern der Netzwerkstruktur 2 und insbesondere des Notbeleuchtungssystem 1 erfolgen. Die verschiedenen Leuchten des Notbeleuchtungssystems 1 weisen als Lichtquellen LED, OLED oder ähnliche Lichtquellen mit reduziertem Leistungsbedarf auf. In jeder Leuchte können eine Mehrzahl solcher LED oder OLED angeordnet sein.

Hinsichtlich einer Ersatzstromversorgung 25 ist zu beachten, dass diese sowohl eine energieverbrauchende Netzwerkkomponente 3, 11 als auch eine energieversorgende Netzwerkkomponente 3, 12 sein kann. Dies hängt davon ab, ob die Ersatzstromversorgung 15 zur Energieversorgung eingesetzt ist, falls beispielsweise die Netzstromversorgung 8 ausfällt. Andernfalls, d.h. bei wirksamer Netzstromversorgung 8, kann die entsprechende Ersatzstromversorgung 25 mittels einer zugeordneten Ladeeinrichtung 21 von der entsprechenden PSE geladen werden, sodass in diesem Fall die Ersatzstromversorgung 25 eine energieverbrauchende Netzwerkkomponente 3, 12 ist. Die Ladeeinrichtung 21 kann auch direkt einer Netzstromversorgung 8 zugeordnet sein, siehe Verbindung 33 in Figur 1.

Der Zugang zur Netzwerkstruktur des Notbeleuchtungssystems 1 kann in bestimmter Weise kontrolliert werden, wobei beispielsweise in der zentralen Überwachungseinheit 15 eine Zugangskontrolleinrichtung 29 zur Kontrolle des Zugangs und auch zur Authentifizierung eines Benutzers vorgesehen sein kann. Diese Zugangskontrolleinrichtung 29 kann auch bei Zugang zu einer anderen Netzwerkkomponente 3 die entsprechende Zugangsberechtigung und Authentifizierung überprüfen bzw. durchführen.

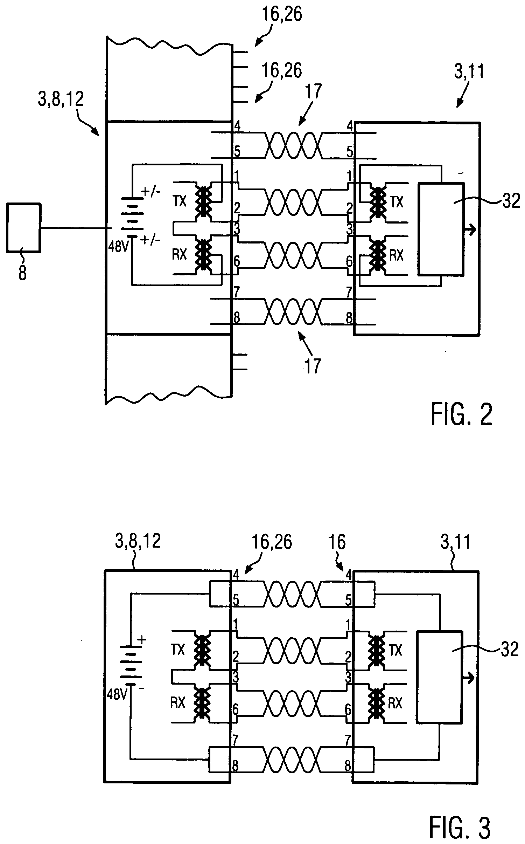

Für alle entsprechenden Netzwerkkomponenten sind entsprechende Steckverbinder 16 zum Anschluss des Ethernetkabels 10 vorgesehen. Normgemäß sind gegenwärtig die Steckverbinder 16 RJ-45 Steckverbinder. Insbesondere im Bereich eines PSE können eine Mehrzahl solcher Steckverbinder mit einer solchen Netzwerkkomponente 3 verbunden werden, siehe auch Figur 2.

Über die entsprechenden Ethernetkabel 10 erfolgt sowohl eine Übermittelung von Daten als auch die Strom- oder Energieversorgung der verschiedenen Netzwerkkomponenten 3, zumindest wenn diese Netzwerkkomponenten Energieverbraucher 11 sind. Solche Energieverbraucher werden in der Regel auch durch PD gekennzeichnet.

In Figur 1 sind nur die entsprechenden Komponenten des Notbeleuchtungssystems 1 dargestellt, wobei weitere Netzwerkkomponenten bereits vorhanden sein können, oder auch zu einem späteren Zeitpunkt hinzugefügt werden können, wie beispielsweise IP-Telefone, Web-Kameras, Modems, Router oder dergleichen.

Die Netzwerkstruktur 2 nach Figur 1 ist in verschiedene Netzwerksegmente 18, 19 und 20 unterteilt. Jedes der Netzwerksegmente 18 bis 20 weist eine Anzahl von Netzwerkkomponenten 3 des Notbeleuchtungssystems 1 auf. In diesem Zusammenhang besteht die Möglichkeit, dass von der PSE 12 oder auch der Ersatzstromversorgung 25 her je nach Leistungsbedarf eine entsprechende Einspeisung der Versorgungsspannung auf entsprechende Netzwerksegmente verteilt stattfindet.

Durch die Stromversorgung über die Ethernetkabel 10, d.h. eine sogenannte Power Over Ethernet (PoE)-Technologie, sind Einzelbatterieleuchten nicht notwendig. Eine solche Einzelbatterieleuchte weist eine entsprechende wiederaufladbare Batterie auf, sodass sie bei Ausfall der Netzstromversorgung 8 autark weiter betrieben werden kann. Solche Einzelbatterieleuchten sind auch bei dem erfindungsgemäßen Notbeleuchtungssystem 1 einsetzbar, können allerdings durch zentral versorgte Leuchten ohne solche Batterien ersetzt werden. Dies bedeutet, dass beispielsweise nur die zentrale Ersatzstromversorgung 25 überwacht und gegebenenfalls zu laden ist, wodurch sich eine größere Servicefreundlichkeit des Notbeleuchtungssystems 1 ergibt. Eine entsprechende Ladeeinrichtung muss in diesem Zusammenhang auch nur der Ersatzstromversorgung 25 zum Laden zugeordnet sein.

Neben den Leuchten sind auch die anderen Netzwerkkomponenten des Notbeleuchtungssystems PoE-fähige Netzwerkkomponenten, d.h. sie werden mit Daten und Energie über die Ethernetkabel 10 versorgt.

Auch weitere Funktionalitäten des Notbeleuchtungssystems 1 sind in der entsprechenden Netzwerkstruktur 2 realisiert, wie beispielsweise Ermittlung des Status einer Netzwerckomponente, Abrufbarkeit des ermittelten Status von einer entsprechenden Netzwerckomponente oder Melden des Status an eine Netzwerkkomponente wie beispielsweise die zentrale Überwachungseinheit 15. Dies gilt analog auch für bestimmte Testabläufe, die bei Notbeleuchtungssystemen vorgesehen sind. Solche Testabläufe betreffen beispielsweise Verfügbarkeit der Ersatzstromversorgung, einen Betriebsdauertest, oder andere Tests, die wiederholend im Notbeleuchtungssystem 1 durchzuführen sind.

Wird bei einem solchen Notbeleuchtungssystem beispielsweise ein Netzausfall der Netzstromversorgung 8 festgestellt, führt dies zu einer Aktivierung der entsprechenden Leuchten wie Sicherheitsleuchten 4 und Rettungszeichenleuchten 5. Die Energieversorgung erfolgt über die Ethernetkabel nach PoE-Technologie. Die energieversorgende Netzwerckomponente, siehe PSE 12, kann weiterhin beispielsweise aus einer anderen Netzstromversorgung 8 die Netzwerkkomponenten versorgen oder die Versorgung wird von einer entsprechenden Ersatzstromversorgung 25 übernommen, die der PSE, bzw. einer End-span- oder Midspan-Versorgungseinrichtung 13, 14 zugeordnet ist.

Bei Versorgung durch Netzstromversorgung 8 erfolgt in der Regel ebenfalls eine Überwachung und ein Laden der Ersatzstromversorgung, wobei dies ebenfalls von der PSE durchgeführt werden kann. In diesem Zusammenhang kann insbesondere der Status der Ladeeinrichtung sowie auch der Ersatzstromversorgung überwacht und über die Netzwerkstruktur abrufbar sein. Eine entsprechende Visualisierung eines solchen Status kann an unterschiedlichen Netzwerkkomponenten 3 erfolgen, wie beispielsweise an der zentralen Überwachungseinheit 15. Analog kann ein solcher Status auch an Leuchten als Netzwerkkomponenten 3 dargestellt werden, siehe beispielsweise eine Anzeigeeinrichtung 22 der Rettungszeichenleuchte 5 nach Figur 1. Eine solche Anzeigeeinrichtung 22 kann LEDs, LCDs, OLEDs oder dergleichen umfassen, um sowohl den Status als auch andere Betriebs- und Fehlerzustände zu signalisieren.

Die Netzwerkstruktur 2 des erfindungsgemäßen Notbeleuchtungssystems 1 kann weiterhin Web-Interfaces aufweisen, die beispielsweise einer Gruppe von Leuchten oder anderen Netzwerkkomponenten zugeordnet ist. Auch mittels eines solchen Web-Interfaces lassen sich Status oder Zustände der Komponenten anzeigen.

In Figur 1 weist die dargestellte Rettungszeichenleuchte 5 weiterhin eine Testauslöseeinrichtung 23 beispielsweise in Form eines Testtasters auf. Durch Betätigen dieser Testauslöseeinrichtung 23 lassen sich entsprechende Tests an oder von der jeweiligen Netzwerckomponente durchführen.

Ein solcher Test kann auch die Überprüfung von Sicherheitsfunktionen des Notbeleuchtungssystems sein. D.h. es wird beispielsweise der PSE veranlasst, für eine bestimmte Zeit auf Ersatzstromversorgung 25 umzuschalten, um einerseits eine Verfügbarkeit der Ersatzstromversorgung über eine bestimmte Betriebszeit festzustellen oder auch um einen Betriebsdauertest auszulösen, bei dem alle energieverbrauchenden Netzwerkkomponenten zugeschaltet bzw. aktiviert sind.

In der Netzwerkstruktur 2 des erfindungsgemäßen Notbeleuchtungssystems 1 ist weiterhin eine einfache Adressierung der entsprechenden Netzwerkkomponenten über entsprechend zugeordnete MAC-Adressen möglich.

In Figur 2 ist ein Teil der Netzwerkstruktur 2 nach Figur 1 dargestellt, wobei insbesondere eine Verbindung über ein Ethernetkabel 10 zwischen PSE 12 als Energieversorger und einer Netzwerkkomponente 3 als Energieverbraucher 11 dargestellt ist. Der PSE 12 ist mit der Netzstromversorgung 8 verbunden, die beispielsweise 230 VAC bereitstellt. Alternativ kann an Stelle der Netzstromversorgung auch eine andere, für allgemeine Anwendungen bereitgestellte Spannung, zur Versorgung genutzt werden. Die entsprechende Spannung wird bei dem dargestellten Ausführungsbeispiel auf 48 VDC umgesetzt und diese Spannung über zwei verdrillte Adernpaare an die angeschlossenen Netzwerkkomponenten 3 übertragen. Das entsprechende Ethernetkabel 10 weist in der Regel vier verdrillte Adernpaare auf, von denen bei dem Ausführungsbeispiel nach Figur 2 zwei Adernpaare gleichzeitig zur Energieversorgung und Datenübermittlung eingesetzt werden. Dies entspricht einer sogenannten Phantomspeisung bei der Datenübertragung und Energieversorgung über die gleichen Adernpaare erfolgt. In diesem Zusammenhang ist zu beachten, dass ein Adernpaar für eine Übertragungsrichtung und das andere Adernpaar für die andere Übertragungsrichtung zwischen den jeweiligen Netzwerkkomponenten eingesetzt wird.

In Figur 2 ist weiterhin erkennbar, dass der PSE 12 nicht nur mit einem Ethernetkabel 10 über einen entsprechenden Steckverbinder 16 verbindbar ist, sondern dass eine Vielzahl entsprechender Steckverbinder 16 zum Anschluss einer entsprechenden Anzahl von Ethernetkabeln 10 verwendet werden können.

Auf Seiten der energieversorgten Netzwerkkomponente 3 kann mittels eines Spannungskonverters 32 die übermittelte Spannung in benötigte Spannungswerte umgesetzt werden.

Figur 3 entspricht im Wesentlichen der Figur 2, wobei in diesem Fall allerdings die Datenübertragung über zwei freie Adernpaare erfolgt. Dies entspricht einer sogenannten Spare-Pair-Speisung. D.h. es werden zur Energieversorgung ungenutzte Adernpaare zur Übermittlung der Daten bzw. zur Kommunikation unter den Netzwerkkomponenten verwendet.

Zur Vereinfachung sind weitere Details in Figur 3, siehe hier zum Vergleich Figur 2, nicht dargestellt.

Hinsichtlich der Netzwerkstruktur 2 nach Figur 1 sei noch angemerkt, dass diese als Netzwerkkomponente ebenfalls eine Umsetzeinrichtung 27 aufweisen kann, um beispielsweise einer Umsetzung einer Glasfaserverbindung 28 auf Ethernetkabel 10 zu ermöglichen. Die entsprechende Umsetzung kann selbstverständlich auf von einer anderen Verbindung auf Ethernetkabel 10 erfolgen. Dadurch sind entsprechende Umsetzeinrichtungen nicht für unterschiedliche Netzwerkkomponenten erforderlich, sondern im Wesentlichen ist eine entsprechende Netzwerkkomponente, d.h. Umsetzeinrichtung, ausreichend.

## Patentansprüche

1. Notbeleuchtungssystem (1) mit einer Netzwerkstruktur (2), NWS, und einer Mehrzahl von Netzwerkkomponenten (3) NWK, wobei die NWS in Netzwerksegmente segmentiert ist, umfassend zumindest Sicherheitsleuchten (4), Rettungszeichenleuchten (5), Lichtschaltern zugeordnete Lichtschalterabfrageeinrichtungen (6), und Netzspannungsüberwachungseinrichtungen (7) zur Überwachung mindestens einer der in der Regel drei Phasen einer Netzstromversorgung (8),
sowie zumindest die Netzstromversorgung (8) und
eine Ersatzstromversorgung (25),
welche Netzwerkkomponenten (3) untereinander über wenigstens eine Kabelverbindung (9) zumindest zur Datenübertragung verbunden sind,
wobei die Kabelverbindung (9) ein Ethernetkabel (10) ist und dieses zusätzlich zur Datenübertragung zur Stromversorgung der Netzwerkkomponenten eingesetzt ist,
wobei zumindest einige Netzwerkkomponenten Einzelbatterieleuchten sind, welche durch die Netzwerkstruktur zu laden (h₁), zu überwachen (h₂) und zu steuern (h₃) sind und die zugehörige Batterie wieder aufladbar (i₁) und zur Wiederaufladung (i₂) überwachbar ist und **dadurch gekennzeichnet dass**, jeweils einem der Netzwerksegmente (18, 19, 20) der Netzwerkstruktur (2) eine Ersatzstromversorgung (25) zugeordnet ist oder der Ersatzstromversorgung (25) eine Ladeeinrichtung (21) zugeordnet ist, welche insbesondere einer Netzstromversorgung (8) zugeordnet werden kann oder Status von Ladereinrichtung (21) oder Ersatzstromversorgung (25) oder weiterer Netzwerkkomponenten (3) über die Netzwerkstruktur (2) abrufbar ist.

2. Notbeleuchtungssystem nach Anspruch 1, wobei einige Netzwerkkomponenten (3) wie Sicherheitsleuchten (4), Rettungszeichenleuchten (5), Lichtschalterabfrageeinrichtungen (6), Netzspannungsüberwachungseinrichtung (7), Ersatzstromversorgung (5) und dergleichen Energieverbraucher (11), PD, und andere Netzwerkkomponenten (3), wie Netzstromversorgung (8), Ersatzstromversorgung (25) und dergleichen Energieversorger (12), PSE, sind.

3. Notbeleuchtungssystem nach Anspruch 1 oder 2, wobei zum Einspeisen von Leistung und Daten in die Netzwerkstruktur (2) eine Netzwerkkomponente (3) eine sogenannte Endspan-Versorgungseinrichtung (13) ist und/oder die Netzwerkstruktur (2) als Netzwerkkomponente eine sogenannte Midspan-Versorgungseinrichtung (13) aufweist.

4. Notbeleuchtungssystem nach einem der vorangehenden Ansprüche, **dadurch gekennzeichnet, dass** die Netzwerkstruktur (2) eine zentrale Überwachungseinheit (15) zur Überwachung und Steuerung zumindest einer Anzahl der Netzwerkkomponenten (3) aufweist.

5. Notbeleuchtungssystem nach einem der vorangehenden Ansprüche, **dadurch gekennzeichnet, dass** das Ethernetkabel (10), acht-adrig ausgebildet ist, wobei zwei Adernpaare (17) zur Datenübertragung eingesetzt sind und/oder zumindest ein freies Adernpaar (17) zur Stromversorgung eingesetzt ist und/oder die Adernpaare zur Datenübertragung auch zur Stromversorgung eingesetzt sind und/oder das Ethernetkabel (10) ein Twisted-Pair-Kabel ist.

6. Notbeleuchtungssystem nach Anspruch 1, wobei der Status an wenigstens einer Leuchte (4, 5) als Netzwerkkomponente (3) übertragbar und an der Leuchte darstellbar ist und/oder der Leuchte (4, 5) eine Anzeigeeinrichtung (22) insbesondere zur Signalisierung von Betriebs- und/oder Fehlerzuständen zugeordnet ist.

7. Notbeleuchtungssystem nach einem der vorangehenden Ansprüche, wobei einer Gruppe von Netzwerkkomponenten (3) ein Web-Interface und/oder jeder Netzwerkkomponente (3) eine MAC-Adresse zugeordnet ist und/oder zumindest bei Initialisierung der Netzwerkstruktur (2) eine Klassifizierung und/oder Adressierung der Netzwerkkomponenten (3) durchführbar ist.

8. Notbeleuchtungssystem nach einem der vorangehenden Ansprüche, wobei das Notbeleuchtungssystem (1) ein Mischbetriebssystem ist, bei dem eine Anzahl von Komponenten über eine sogenannte Energieleitungskommunikation mit insbesondere der zentralen Überwachungseinheit (15) verbunden sind.

9. Notbeleuchtungssystem nach einem der vorangehenden Ansprüche, wobei die Energieverbraucher (11) einen vorbestimmten Abschlusswiderstand zur Feststellung einer PoE-Fähigkeit aufweisen.

10. Notbeleuchtungssystem nach einem der vorangehenden Ansprüche, wobei die Netzwerkstruktur (2) eine Zugangskontroll- und Authentifizierungseinrichtung (29) und/oder zumindest einen WLAN- und/oder Bluetooth-Access Point und/oder zumindest eine Umsetzeinrichtung (27) zur Umsetzung von Glasfaserverbindung (28) auf Ethernetkabel (10) und/oder eine VLAN-Funktionalität aufweist.

11. Verfahren zur Versorgung eines Notbeleuchtungssystems (1) nach einem der vorangehenden Ansprüche mit Energie und Daten, mit den folgenden Schritten
- Verbinden der Netzkomponenten (3) untereinander mittels Ethernetkabeln (10),
- Übertragen von Energie und Daten über die Ethernetkabel (10),
Selbstversorgung einer Anzahl von Netzwerkkomponenten, insbesondere batteriebetriebener Netzwerkkomponenten, mit Energie durch zumindest eine diesen zugeordnete, wiederaufladbare Batterieeinrichtung (30), welche durch die Netzwerkstruktur zu laden, zu überwachen und zu steuern ist, sowie Versorgen der energieverbrauchenden Netzwerkkomponenten (3, 11) bei Detektion eines Netzausfalls von einer oder mehreren energieversorgenden Netzwerckomponenten (3, 12) her und/oder Laden der Ersatzstromversorgung (25) in der Netzwerkstruktur (2) mittels einer zugeordneten Ladeeinrichtung (21) und/oder energieversorgender Netzwerkkomponente (3, 12) und/oder der Netzstromversorgung (8).

12. Verfahren nach Anspruch 11, **gekennzeichnet durch** Versorgen der energieverbrauchenden Netzwerkkomponenten (3, 11) mit Energie mittels einer oder mehrerer energieversorgender Netzwerkkomponenten (3, 12) und/oder Einspeisen von Daten und Energie in die Netzwerkstruktur (2) mittels wenigstens einer sogenannten Endspan-Versorgungseinrichtung (13) als Netzwerkkomponente (3).

13. Verfahren nach Anspruch 11 oder 12, **gekennzeichnet durch** Steuern und Überwachen der Netzwerkkomponenten mittels zumindest einer insbesondere zentralen Überwachungseinheit (15).

14. Verfahren nach einem der vorangehenden Ansprüche 11 bis 13, **gekennzeichnet durch** Segmentieren der Netzwerkstruktur (2) und Verteilen der Energieversorgung auf entsprechende Netzwerksegmente (18, 19, 20) insbesondere in Abhängigkeit vom Leistungsbedarf der Netzwerkkomponenten des jeweiligen Netzwerksegments.

15. Verfahren nach einem der vorangehenden Ansprüche 11 bis 14, **gekennzeichnet durch** eine dezentrale Versorgung der Netzwerkstruktur mit Energie mittels einer Anzahl dezentral angeordneter Batterieeinrichtungen insbesondere als Ersatzstromversorgung (25).

16. Verfahren nach einem der vorangehenden Ansprüche 11 bis 15, **gekennzeichnet durch** Überwachen des Status der Netzspannungsversorgung mittels einer Netzspannungsüberwachungseinrichtung (7) und insbesondere Melden des Status an eine Leuchte (4, 5) als Netzwerkkomponente (3) und/oder an die zentrale Überwachungseinheit (15).

17. Verfahren nach einem der vorangehenden Ansprüche 11 bis 16, **gekennzeichnet durch** Überwachen des Status der Ladeeinrichtung (21) und der Ersatzstromversorgung (25) mittels der Energieversorgenden Netzwerkkomponenten (3, 12) und/oder Abrufen des Status der Ladeeinrichtung (21) und/oder der Ersatzstromversorgung (25) durch eine Netzwerkkomponente (3) und Anzeige des Status mittels dieser Netzwerkkomponente (3).

18. Verfahren nach einem der vorangehenden Ansprüche 11 bis 17, **gekennzeichnet durch** Umschalten auf Ersatzstromversorgung (25) durch die energieversorgende Netzwerkkomponente (3, 12) und Durchführen eines Tests bei zumindest einer Netzwerkkomponente (3), insbesondere eines Tests zum Feststellen der Verfügbarkeit der Ersatzstromversorgung (25), eines Betriebsdauertests, eines Sicherheitstest oder dergleichen.

19. Verfahren nach einem der vorangehenden Ansprüche 11 bis , **gekennzeichnet durch** Zuordnen einer MAC-Adresse zu jeder Netzwerkkomponente (3) insbesondere jeder Leuchte (4, 5) der Netzwerkstruktur (2).

20. Verfahren nach einem der vorangehenden Ansprüche 11 bis 19, **gekennzeichnet durch** Abschalten von Anschlussports (26) der energieversorgenden Netzwerkkomponente (3, 12) für eine Zeitdauer, in der mit dem entsprechenden Anschlussport über das Ethernet-Kabel (10) verbundene energieverbrauchende Netzwerkkomponenten (3, 11) nicht im Einsatz sind.

21. Verfahren nach einem der vorangehenden Ansprüche 11 bis 20, **gekennzeichnet durch** Feststellen eines Leistungsklasse bzw. einer PoE-Fähigkeit einer energieverbrauchende Netzwerkkomponente (3, 11) bei deren Anschluss in der Netzwerkstruktur (2) bzw. bei Initialisieren der Netzwerkstruktur und/oder Zuordnen und/oder Abrufen einer Adresse der Energieverbrauchende Netzwerkkomponente (3, 11) zusammen mit Feststellen der Leistungsklasse bzw. PoE-Fähigkeit.

22. Verfahren nach einem der vorangehenden Ansprüche 11 bis 21, **gekennzeichnet durch** Übermitteln der Daten über zwei Adernpaare (17) des insbesondere acht-adrigen Ethernetkabels (10) und/oder Einbinden zumindest eines WLAN-und/oder Bluetooth-Access Points (24) in die Netzwerkstruktur (2) und/oder Anschließen der Netzwerkstruktur (2) an eine Glasfaserverbindung (28) oder dergleichen, mittels einer Umsetzeinrichtung (27).

23. Verfahren nach einem der vorangehenden Ansprüchen 11 bis 22, **gekennzeichnet durch** Einrichten zumindest eines virtuellen Netzes, VLAN, auf Basis der physikalischen Netzwerkstruktur (2).

## Claims

1. Emergency lighting system (1) with a network structure (2) and a plurality of network components (3) wherein the network structure is segmented into network segments,
comprising at least emergency luminaires (4), escape sign luminaires (5), light switch query devices (6) assigned to light switches and mains voltage monitoring devices (7) for monitoring at least one of the usually three phases of a mains supply (8),
and at least the mains power supply (8) and
a standby power supply (25),
wherein the network components (3) are interconnected via at least one cable connection (9) at least for data communication,
wherein the cable connection (9) is an Ethernet cable (10) which in addition to data communication is used for power supply to the network components,
wherein at least some network components are single-battery luminaires which are to be charged (h₁), monitored (h₂) and controlled (h₃) via the network structure wherein the respective associated battery is rechargeable (ii) and its recharging (i₂) is monitored, **characterised in that** a backup power supply (25) is assigned to each one of the network segments (18, 19, 20) of the network structure (2) or a charging device (21) which can be assigned in particular to a network power supply (8) is assigned to the backup power supply (25) or the status of the charging device (21) or the backup power supply (25) or additional network components (3) can be polled via the network structure (2).

2. Emergency lighting system according to claim 1, wherein some network components (3), such as emergency luminaires (4), escape sign luminaires (5), light switch query devices (6), a mains voltage monitoring device (7), a standby power supply (5) and the like are power consumers (11) and other network components (3), such as a mains power supply (8), a standby power supply (25) and the like are power suppliers (12).

3. Emergency lighting system according to claim 1 or 2, wherein a network component (3) for feeding power and data into the network structure (2) is an end span supply device (13) and/or the network structure (2) has a midspan supply device (13) as a network component.

4. Emergency lighting system according to one of the preceding claims, **characterized in that** the network structure (2) has a central monitoring unit (15) for monitoring and controlling at least a number of the network components (3).

5. Emergency lighting system according to one of the preceding claims, **characterized in that** the Ethernet cable (10) is of eight-core design, wherein two core pairs (17) are used for data communication and/or at least one free core pair (17) is used for power supply and/or the core pairs for data communication are also used for power supply and/or the Ethernet cable (10) is a twisted-pair cable.

6. Emergency lighting system according to claim 1, wherein the status of at least one luminaire (4, 5) as a network component (3) can be communicated and displayed at the luminaire and/or a display device (22) is assigned to the luminaire (4, 5), in particular for signalling operating and/or fault conditions.

7. Emergency lighting system according to one of the preceding claims, wherein a web interface is assigned to a group of network components (3) and/or a MAC address is assigned to each network component (3) and/or a classification and/or addressing of the network components (3) can be carried out at least when initialising the network structure (2).

8. Emergency lighting system according to one of the preceding claims, wherein the emergency lighting system (1) is a mixed operation system in which a number of components are connected via power line communication in particular to the central monitoring unit (15).

9. Emergency lighting system according to one of the preceding claims, wherein the power consumers (11) have a predetermined terminal resistance for detecting a PoE capability.

10. Emergency lighting system according to one of the preceding claims, wherein the network structure (2) has an access control and authentication device (29) and/or at least one WLAN and/or Bluetooth access point and/or at least one conversion device (27) for adapting fibre-optic link (28) to Ethernet cable (10) and/or a VLAN functionality.

11. Method for supplying an emergency lighting system (1) according to one of the preceding claims with power and data, comprising the following steps:
- connecting the network components (3) to each other using Ethernet cables (10),
- transmitting power and data via the Ethernet cables (10),
self-supplying a number of network components, in particular battery-powered network components, with power by means of at least one rechargeable battery device (30) assigned to them, which is to be charged, monitored and controlled by the network structure, and supplying the power-consuming network components (3, 11) upon detection of a mains failure from one or more power-supplying network components (3, 12) and/or charging the backup power supply (25) in the network structure (2) by means of an associated charging device (21) and/or power-supplying network component (3, 12) and/or the mains power supply (8).

12. Method according to claim 11, **characterized by** supplying power to the power-consuming network components (3, 11) by means of one or more power-supplying network components (3, 12) and/or feeding data and power into the network structure (2) by means of at least one end-span supply device (13) as a network component (3).

13. Method according to claim 11 or 12, **characterized by** controlling and monitoring the network components by means of at least one in particular central monitoring unit (15).

14. Method according to one of the preceding claims 11 to 13, **characterized by** segmenting the network structure (2) and distributing the power supply to respective network segments (18, 19, 20), in particular according to the power demand of the network components of the respective network segment.

15. Method according to one of the preceding claims 11 to 14, **characterized by** a distributed supply of power to the network structure by means of a number of distributed battery devices, in particular as a backup power supply (25).

16. Method according to one of the preceding claims 11 to 15, **characterised by** monitoring the status of the mains voltage supply by means of a mains voltage monitoring device (7) and in particular reporting the status to a luminaire (4, 5) as a network component (3) and/or to the central monitoring unit (15).

17. Method according to one of the preceding claims 11 to 16, **characterized by** monitoring the status of the charging device (21) and the backup power supply (25) by means of the power supplying network components (3, 12) and/or retrieving the status of the charging device (21) and/or the backup power supply (25) by a network component (3) and displaying the status by means of this network component (3).

18. Method according to one of the preceding claims 11 to 17, **characterized by** switching over to a backup power supply (25) by the power-supplying network component (3, 12) and carrying out a test on at least one network component (3), in particular a test for determining the availability of the backup power supply (25), a duration test, a safety test or the like.

19. Method according to one of the preceding claims 11 to 18, **characterized by** assigning a MAC address to each network component (3), in particular to each luminaire (4, 5) of the network structure (2).

20. Method according to one of the preceding claims 11 to 19, **characterized by** switching off connection ports (26) of the power-supplying network component (3, 12) for a period of time during which power-consuming network components (3, 11) connected to the respective connection port via the Ethernet cable (10) are not in use.

21. Method according to one of the preceding claims 11 to 20, **characterized by** determining a power class or a PoE capability of a power-consuming network component (3, 11) when connecting it in the network structure (2) or when initialising the network structure and/or assigning and/or retrieving an address of the power-consuming network component (3, 11) together with determining the performance class or PoE capability.

22. Method according to one of the preceding claims 11 to 21, **characterized by** transmitting the data via two core pairs (17) in particular of the eight-core Ethernet cable (10) and/or integrating at least one WLAN and/or Bluetooth access point (24) into the network structure (2) and/or connecting the network structure (2) to a fibre-optic link (28) or the like by means of a conversion device (27).

23. Method according to one of the preceding claims 11 to 22, **characterized by** setting up at least one virtual network, VLAN, based on the physical network structure (2).

## Revendications

1. Système d'éclairage d'urgence (1) avec une structure de réseau (2), NWS, et une pluralité de composants de réseau (3) NWK, dans lequel le NWS est segmenté en segments de réseau,
comprenant au moins des feux de sécurité (4), des feux de signalisation de secours (5), des dispositifs d'interrogation d'interrupteurs (6) associés à des interrupteurs d'éclairage, et des dispositifs de surveillance de la tension du secteur (7) pour surveiller au moins une des trois phases généralement présentes dans une alimentation secteur (8),
et au moins l'alimentation électrique du réseau (8) et
une alimentation électrique de substitution (25),
lesquels composants du réseau (3) sont reliés entre eux par au moins une connexion par câble (9) au moins pour la transmission de données,
dans lequel la connexion par câble (9) est un câble Ethernet (10) et celui-ci est utilisé en plus de la transmission de données pour l'alimentation électrique des composants du réseau,
dans lequel au moins certains composants du réseau sont des lumières à batterie unique qui doivent être chargées (h₁), surveillées (h₂) et commandées (h₃) par la structure du réseau et la batterie associée est rechargeable (i₁) et peut être surveillée pour la recharge (i₂) et **caractérisé en ce que**
une alimentation électrique de substitution (25) est respectivement affectée à l'un des segments de réseau (18, 19, 20) de la structure de réseau (2) ou un dispositif de charge (21) est affecté à l'alimentation électrique de substitution (25), qui peut être affecté en particulier à une alimentation électrique de réseau (8) ou à l'état du dispositif de charge (21) ou de l'alimentation électrique de substitution (25) ou d'autres composants de réseau (3) peuvent être sollikcités par le biais de la structure de réseau (2).

2. Système d'éclairage d'urgence selon la revendication 1, dans lequel certains composants de réseau (3) tels que des lampes de sécurité (4), des lampes à pictogramme (5), des dispositifs d'interrogation d'interrupteur d'éclairage (6), un dispositif de surveillance de la tension du réseau (7), une alimentation d'urgence (5) et similaires sont des consommateurs d'énergie (11), PD, et d'autres composants de réseau (3) tels qu'une alimentation de réseau (8), une alimentation de substitution (25) et similaires sont des fournisseurs d'énergie (12), PSE.

3. Système d'éclairage d'urgence selon les revendications 1 ou 2, dans lequel, pour l'alimentation en énergie et en données de la structure de réseau (2), un composant de réseau (3) est un dispositif d'alimentation dit d'extrémité (13) et/ou la structure de réseau (2) comporte un dispositif d'alimentation dit intermédiaire (13) comme composant de réseau.

4. Système d'éclairage d'urgence selon l'une des revendications précédentes, **caractérisé en ce que** la structure du réseau (2) comporte une unité centrale de surveillance (15) pour surveiller et contrôler au moins un certain nombre des composants du réseau (3).

5. Système d'éclairage d'urgence selon l'une des revendications précédentes, **caractérisé en ce que** le câble Ethernet (10) est conçu avec huit fils, deux paires de fils (17) étant utilisées pour la transmission de données et/ou au moins une paire de fils libre (17) étant utilisée pour l'alimentation électrique et/ou les paires de fils pour la transmission de données étant également utilisées pour l'alimentation électrique et/ou le câble Ethernet (10) étant un câble à paires torsadées.

6. Système d'éclairage d'urgence selon la revendication 1, dans lequel l'état peut être transmis à au moins un luminaire (4, 5) en tant que composant de réseau (3) et peut être affiché au luminaire et/ou un dispositif d'affichage (22) est associé au luminaire (4, 5), en particulier pour la signalisation d'états de fonctionnement et/ou d'erreurs.

7. Système d'éclairage d'urgence selon l'une des revendications précédentes, dans lequel une interface web est attribuée à un groupe de composants de réseau (3) et/ou une adresse MAC est attribuée à chaque composant de réseau (3) et/ou une classification et/ou un adressage des composants de réseau (3) peuvent être effectués au moins lorsque la structure du réseau (2) est initialisée.

8. Système d'éclairage d'urgence selon l'une des revendications précédentes, dans lequel le système d'éclairage d'urgence (1) est un système d'exploitation mixte dans lequel un certain nombre de composants sont connectés, en particulier, à l'unité centrale de surveillance (15) via une communication dite par ligne électrique.

9. Système d'éclairage d'urgence selon l'une des revendications précédentes, dans lequel les consommateurs d'énergie (11) ont une résistance terminale prédéterminée pour déterminer une capacité PoE.

10. Système d'éclairage d'urgence selon l'une des revendications précédentes, dans lequel la structure du réseau (2) comporte un dispositif de commande d'accès et d'authentification (29) et/ou au moins un point d'accès WLAN et/ou Bluetooth et/ou au moins un dispositif de conversion (27) pour convertir la connexion par fibre optique (28) en câble Ethernet (10) et/ou une fonctionnalité VLAN.

11. Procédé pour alimenter en énergie et en données un système d'éclairage d'urgence (1) selon l'une des revendications précédentes, comprenant les étapes suivantes:
- connecter les composants du réseau (3) entre eux à l'aide de câbles Ethernet (10),
- transmettre de l'énergie et des données via les câbles Ethernet (10),
l'auto-alimentation de plusieurs composants de réseau, en particulier des composants de réseau alimentés par batterie, en énergie au moyen d'au moins un dispositif de batterie rechargeable (30) qui leur est attribué et qui peut être chargé, surveillé et commandé par la structure du réseau, et alimentation des composants de réseau consommateurs d'énergie (3, 11) lors de la détection d'une panne de courant d'un ou plusieurs composants de réseau d'alimentation électrique (3, 12) et/ou de la charge de l'alimentation électrique de substitution (25) dans la structure du réseau (2) au moyen d'un dispositif de charge associé (21) et/ou de l'alimentation électrique du composant de réseau (3, 12) et/ou de l'alimentation électrique du réseau (8).

12. Procédé selon la revendication 11, **caractérisé par** l'alimentation en énergie des composants de réseau consommateurs d'énergie (3, 11) au moyen d'un ou plusieurs composants de réseau fournisseurs d'énergie (3, 12) et/ou l'alimentation en données et en énergie de la structure de réseau (2) au moyen d'au moins un dispositif dit d'alimentation de bout de ligne (13) en tant que composant de réseau (3).

13. Procédé selon la revendication 11 ou 12, **caractérisé par** la commande et la surveillance des composants du réseau au moyen d'au moins une unité de surveillance, en particulier centrale (15).

14. Procédé selon l'une des revendications précédentes 11 à 13, **caractérisé par** la segmentation de la structure du réseau (2) et la distribution de l'alimentation électrique aux segments de réseau correspondants (18, 19, 20), en particulier en fonction de la demande en énergie des composants de réseau du segment de réseau respectif.

15. Procédé selon l'une des revendications précédentes 11 à 14, **caractérisé par** une alimentation décentralisée de la structure du réseau en énergie au moyen de plusieurs dispositifs de batteries disposés de manière décentralisée, en particulier comme alimentation de substitution (25).

16. Procédé selon l'une des revendications précédentes 11 à 15, **caractérisé par** la surveillance de l'état de l'alimentation en tension du réseau au moyen d'un dispositif de surveillance de la tension du réseau (7) et en particulier la communication de l'état à un voyant (4, 5) en tant qu'élément du réseau (3) et/ou à l'unité centrale de surveillance (15).

17. Procédé selon l'une des revendications précédentes 11 à 16, **caractérisé par** la surveillance de l'état du dispositif de charge (21) et de l'alimentation électrique de substitution (25) au moyen des composants de réseau d'alimentation électrique (3, 12) et/ou l'appel de l'état du dispositif de charge (21) et/ou de l'alimentation électrique de substitution (25) par un composant de réseau (3) et l'indication de l'état au moyen de ce composant de réseau (3).

18. Procédé selon l'une des revendications précédentes 11 à 17, **caractérisé par** la commutation sur une alimentation électrique de substitution (25) par le composant de réseau d'alimentation électrique (3, 12) et la réalisation d'un test sur au moins un composant de réseau (3), en particulier un test pour déterminer la disponibilité de l'alimentation électrique de substitution (25), un test d'endurance, un test de sécurité ou similaire.

19. Procédé selon l'une des revendications précédentes 11 à , **caractérisé par** l'attribution d'une adresse MAC à chaque composant du réseau (3), en particulier à chaque feu (4, 5) de la structure du réseau (2).

20. Procédé selon l'une des revendications précédentes 11 à 19, **caractérisé par** la coupure des ports de connexion (26) du composant de réseau d'alimentation en énergie (3, 12) pendant une période de temps pendant laquelle les composants de réseau consommateurs d'énergie (3, 11) connectés au port de connexion correspondant via le câble Ethernet (10) ne sont pas utilisés.

21. Procédé selon l'une des revendications précédentes 11 à 20, **caractérisé par** la détermination d'une classe d'énergie ou d'une capacité PoE d'un composant de réseau consommateur d'énergie (3, 11) pendant sa connexion dans la structure de réseau (2) ou pendant l'initialisation de la structure de réseau et/ou l'attribution et/ou la récupération d'une adresse du composant de réseau consommateur d'énergie (3, 11) conjointement avec la détermination de la classe d'énergie ou de la capacité PoE.

22. Procédé selon l'une des revendications précédentes 11 à 21, **caractérisé par** la transmission des données par le biais de deux paires de fils (17) du câble Ethernet (10), en particulier à huit conducteurs, et/ou l'intégration d'au moins un point d'accès WLAN et/ou Bluetooth (24) dans la structure de réseau (2) et/ou la connexion de la structure de réseau (2) à une connexion en fibre de verre (28) ou similaire au moyen d'un dispositif de conversion (27).

23. Procédé selon l'une des revendications précédentes 11 à 22, **caractérisé par** la mise en place d'au moins un réseau virtuel, VLAN, sur la base de la structure physique du réseau (2).
